# EUROPEAN PATENT APPLICATION

(11) **EP 4 321 409 A1**
(43) Date of publication of application: **14.02.2024**
(21) Application number: 22836890.8
(22) Date of filing: 05.07.2022
(51) Int. Cl.: B61L 15/00, B61L 27/00

(54) **TRAIN-CONTROL ON-BOARD DEVICE SYSTEM COMPATIBLE WITH VARIOUS TYPES OF TRAIN CONTROL SYSTEMS**

(30) Priority: 06.07.2021 CN 202110762699
(71) Applicant: CRSC Research & Design Institute Group Co., Ltd., Beijing 100070 (CN)
(72) Inventor: ZHANG, Youbing, Beijing 100070 (CN); CHEN, Zhiqiang, Beijing 100070 (CN); ZHANG, Guozhen, Beijing 100070 (CN); YU, Xiaona, Beijing 100070 (CN)
(74) Representative: Haseltine Lake Kempner LLP
(86) International application number: PCT/CN2022/103808
(87) International publication number: WO 2023/280139

(57) **Abstract**

A train-control on-board device system compatible with various types of train control systems. The train-control on-board device system comprises a general on-board device having a control right, and several special on-board devices having a simplified structure, wherein the special on-board device includes a train safety monitoring function and a function of interacting with a ground device, and the general on-board device includes several function modules to be shared by the special on-board devices. By means of the train-control on-board device system, general on-board device resources can be shared by special on-board devices, thereby reducing the cost and volume of the devices, and facilitating the mounting of the devices; and it is possible to monitor a train running on lines equipped with different ground devices, thereby improving the adaptability and compatibility of the system.

## Description

### TECHNICAL FIELD

The present invention relates to the technical field of rail traffic control, and in particular, to a train-control on-board device system compatible with various types of train control systems.

### BACKGROUND

When a train needs to run on different types of rail lines, in the prior art, different types of train-control system on-board devices need to be installed in order to accommodate different rail line conditions. In the meantime, each train-control system on-board device needs to be equipped with complete function modules, and the settings and functions of function modules thereof are the same. Therefore, the conventional train-control on-board device system is not integrated to a high degree, and function modules having the same function are not shared among different train-control on-board devices, resulting in problems that the device has a large volume, is not easy for installation, and a high cost.

### SUMMARY

In view of the above problems, the present invention provides a train-control on-board device system compatible with various types of train-control systems, which includes a general on-board device having a control authority and several special on-board devices each having a simplified structure, wherein the special on-board device includes a train safety monitoring function and a function of interacting with a ground device, and the general on-board device comprises several function modules to be shared by the special on-board device.

Further, the special on-board device includes only the train safety monitoring function and the function of interacting with the ground device.

Further, the general on-board device further includes: a train monitoring function module and a special on-board device control function module. The train monitoring function module is configured to implement core logic of train safety monitoring. The special on-board device control function module is configured for the general on-board device to manage the several special on-board devices to realize handover of the control authority to the several special on-board devices.

Further, the function modules to be shared by the special on-board device include a wireless transmission function module, a transponder transmission function module, a velocity and distance measurement function module, a human-machine interface function module, a reference time function module, a data recording function module, a train interface function module, and a braking interface function module.

Further, one terminal of the special on-board device is connected to the general on-board device and another terminal thereof is connected to a special ground information transceiving unit.

Further, the special on-board device interacts information with the ground device through the special ground information transceiving unit.

Further, when the train-control on-board device is powered on, the special on-board device sends to the general on-board device a request to establish a communication connection, and the general on-board device receives the request and checks whether system version of the special on-board device is compatible.

Further, when the general on-board device is compatible with the system version of the special on-board device, the general on-board device establishes the communication connection with the special on-board device, and when the generic on-board device is not compatible with the system version of the specific on-board device, the generic on-board device refuses to establish the communication connection with the specific on-board device.

Further, when the special on-board device reports a failure to the general on-board device, or the general on-board device detects a failure of the special on-board device, the general on-board device prohibits handover of the control authority to the special on-board device.

Further, the special on-board device automatically enters a power-on state from a non-power-on state when the special on-board device is powered on. In the power-on state, the special on-board device establishes a communication connection with the general on-board device.

Further, the special on-board device in the power-on state sends a request to enter a configuration state to the general on-board device, and the general on-board device receives the request to enter the configuration state, and sends a command to enter the configuration state to the special on-board device, so that the special on-board device enters the configuration state.

Further, when the special on-board device is in the configuration state , the general sends general train data, train interface state, braking interface state, velocity and distance measurement performance parameters, and braking performance parameters to the special on-board device.

Further, when special train data is required by the specific on-board device, the special on-board device sends a request to enter data input state to the general on-board device, and the general on-board device sends a command to enter the data input stateto the special on-board device, so that the special on-board device enters the data input state.

Further, when special train data is not required by the special on-board device, the special on-board device sends a request to enter a cold-ready state to the general on-board device, and the general on-board device sends a command to enter the cold-ready state to the special on-board device so that the special on-board device enters the cold-ready state.

Further, in the data input state, the special on-board device requests a driver to input special train data through a human-machine interface function.

Further, after the special on-board device completes input of the special train data, the special on-board device sends a request to enter a cold-ready state to the general on-board device, and the general on-board device sends a command to enter the cold-ready state to the special on-board device, so that the special on-board device enters the cold-ready state.

Further, in a cold-ready state, the special on-board device cannot receive ground data transmitted through a ground transceiving unit.

Further, when the special on-board device in the cold-ready state receives a command to enter the vehicle-control state from the general on-board device, the special on-board device enters the vehicle-control state.

Further, when the general on-board device in a cold-ready state receives a handover command from the ground device or a driver which designates the special on-board device to enter a hot-ready state, the general on-board device sends a command to enter the hot-ready state to the designated specific on-board device, and the designated special on-board device enters the hot-ready state.

Further, the special on-board device in a hot-ready state is capable of receiving ground data.

Further, when the special on-board device in a hot-ready state receives a command to enter a train-control state from the general on-board device, the special on-board device enters the train-control state.

Further, when the special on-board device in a hot-ready state receives a command to enter a cold-ready state from the general on-board device, the special on-board device enters the cold-ready state.

Further, the special on-board device enters a failure state when the specific on-board device, in a power-on state, a configuration state, a data input state, a cold-ready state, a hot-ready state, and a train-control state, detects a failure of the specific on-board device, or the general on-board device detects a failure of the special on-board device and sends a command to enter the failure state to the specific on-board device.

Further, in the power-on state, the configuration state, the data input state, the cold-ready state, the hot-ready state, the vehicle train-control state, and the failure state, the special on-board device is powered off and the special on-board device enters a non-power-on state.

Further, when the special on-board device fails or is powered off, handover of the control authority to the general on-board device is performed, and the train-control on-board device system is in a normal state.

Further, when the train is in a stop state, the general on-board device, in accordance with a handover command, performs handover of the control authority to a special on-board device designated by the handover command or retracts the control authority according to the handover command.

The train-control on-board device system which is compatible with various types of train-control systems provided in the present invention enables sharing of common on-board device resources by specific on-board devices, thereby reducing device cost, reducing device volume, and facilitating device installation. Moreover, the train travelling on rail lines equipped with different ground devices can be monitored, thereby increasing the adaptability and compatibility of the system.

Additional features and advantages of the invention will be set forth in the description which follows, and in part will be obvious from the description, or may be learned by practice of the invention. The objectives and other advantages of the invention may be realized and attained by the structure particularly pointed out in the description and claims herein as well as the appended drawings.

### BRIEF DESCRIPTION OF THE DRAWINGS

In order to more clearly illustrate the embodiments of the present invention or the technical solutions in the prior art, the following will simply describe the accompanying drawings to be used in the description of the embodiments of the present invention or the prior art, and it is obvious that the accompanying drawings in the following description are some embodiments of the present invention, and other drawings can be obtained according to these drawings for those skilled in the art without paying inventive labor.

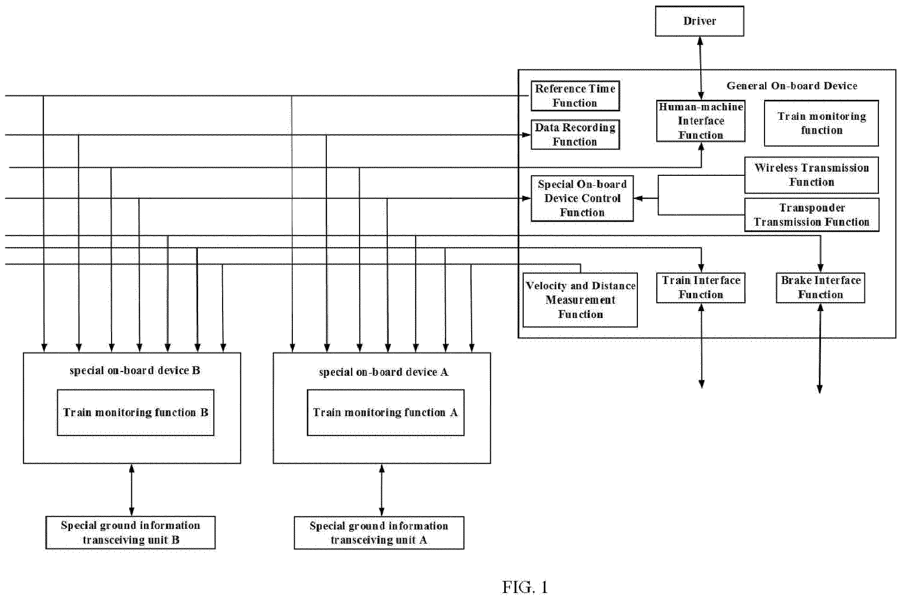

FIG. 1 is a schematic diagram illustrating a train-control on-board device system compatible with various types of train-control systems according to the present invention.

### DETAILED DESCRIPTION

In order to make the objects, technical solutions and advantages of the embodiments of the present invention clearer, the technical solutions of the embodiments of the present invention will be clearly and completely described below with reference to the accompanying drawings of the embodiments of the present invention, and it is apparent that the described embodiments are some, but not all, embodiments of the present invention. Based on the embodiments in the present invention, all other embodiments obtained by those of ordinary skill in the art without paying inventive labor belong to the protection scope of the present invention.

The present invention provides a train-control on-board device system that is compatible with various types of train-control systems, the train-control on-board device system including a general on-board device having a control authority and several special on-board devices each having a simplified structure. The general on-board device is defined as the most widely applied on-board device, which has all function modules of an ordinary on-board device, including a train monitoring function module, a wireless transmission function module, a transponder transmission function module, a velocity and distance measurement function module, a human-machine interface function module, a reference time function module, a data recording function module, a train interface function module, and a braking interface function module, and the like. The special on-board device is defined as another on-board device having a monitoring function using a specific way, which includes a train safety monitoring function and a function for interacting with a ground device. In an embodiment of the invention, the special on-board device contains only the train safety monitoring function and the function for interacting with the ground device.

Exemplarily, the special on-board devices are represented by special on-board devices A and B. It is to be noted that a person skilled in the art can provide more than two special on-board devices in the train-control on-board device system according to actual needs.

Referring to FIG. 1, the general on-board device contains 10 modules, including a train monitoring function module, a wireless transmission function module, a transponder transmission function module, a velocity and distance measurement function module, a human-machine interface function module, a reference time function module, a data recording function module, a train interface function module, a braking interface function module, and a special on-board device control function module.

The wireless transmission function module is configured for wireless data transmission of the general on-board device and the special on-board devices with the ground device. The transponder transmission function module is configured to receive the ground transponder message and provide the same to the general on-board device and the special on-board devices. The velocity and distance measurement function module is configured to calculate the position, speed and direction of the train, and provide the same to the general on-board device and the special on-board devices. The human-machine interface function module is configured to realize human-machine interaction of the general on-board device and the special on-board devices with the driver. The reference time function module is configured to provide a system time to the general on-board device and the special on-board devices. The data recording function module is configured to record operation data of the general on-board device and the special on-board devices. The train interface function module is configured to collect input information to the train interface, and provide the same to the general on-board device and the special on-board devices. The braking interface function module is configured for the general on-board device and the special on-board devices to output braking commands to the train. The wireless transmission function module, the transponder transmission function module, the velocity and distance measurement function module, the human-machine interface function module, the reference time function module, the data recording function module, the train interface function module, and the braking interface function module in the general on-board device described above are all used to be shared with the special on-board devices.

In addition, the train monitoring function module in the general on-board device is configured to implement the core logic of train safety monitoring based on train data and ground information. The special on-board device control function module is configured for the general on-board device to manage all the special on-board devices. The special on-board device control function module is a bridge between the general on-board device and the special on-board devices, and control of the special on-board devices and handover of control authority for the train between the general on-board device and the special on-board devices can be realized by the special on-board device control function module. The train monitoring function module and the special on-board device control function module in the general on-board device are not used to be shared by the special on-board device.

In the embodiment of the present invention, one terminal of the special on-board device A and one terminal of the special on-board device B are connected to the general on-board device through a Profibus bus (or other types of bus such as a MVB bus), and share information collected by the eight function modules including the wireless transmission function module, the transponder transmission function module, the a velocity and distance measurement function module, the human-machine interface function module, the reference time function module, the data recording function module, the train interface function module and the braking interface function module of the general on-board device. The special on-board devices enable safe monitoring of the train by processing the collected information. Meanwhile, another terminal of the special on-board device A and another terminal of the special on-board device B interact information with the ground device through a special ground information transceiving unit A and a special ground information transceiving unit B, respectively, for monitoring the train safety operation on the specific rail lines equipped with corresponding ground devices. The specific ground information transceiving unit means an information receiving unit mounted on a special on-board device and capable of receiving information of the ground device on a specific rail line, and may be a single unit or a combination of two or more units. For example, the train-control system receives ground information, and if only one type of ground information needs to be collected, one type of specific ground information transceiving unit is used, and if two different types of ground information need to be collected, two different types of special terrestrial information transceiving units need to be used.

Specific rail lines refer to rail lines supporting different specific train-control control systems on which corresponding specific ground devices are installed. For example, there is one rail line that supports a special train-control system X, then a special ground device L is installed on the ground. When the train needs to operate on this rail line, handover of the control authority of the on-board device to the special on-board device A needs to be performed through a ground command or driver operation. The special on-board device A can normally receive information from the special ground device L on this rail line, and can carry out safe control of the train with the support of the shared functions of the general on-board device.

After the train-control on-board device system compatible with various types of train-control systems is powered on, the special on-board device requests to establish a communication connection with the general on-board device, and the general on-board device receives the request and checks the system version of the specific on-board device. The generic on-board device successfully establishes the communication connection with the special on-board device when the system version of the special on-board device is compatible with the version of the generic on-board device, and the generic on-board device refuses to establish the communication connection with the special on-board device when the system version of the special on-board device is not compatible with the version of the generic on-board device.

During the handover of the control authority of the train of the on-board device, the general on-board device is capable of receiving a handover command from the driver or a ground device, and granting the control authority of the train to the general on-board device of the handover command or to a special on-board device designated according to the handover command, so that the train operation is monitored by the matched on-board device on different rail lines to ensure safe driving. Only one on-board device can have the right for monitoring the train at any time. For example, an ordinary rail line supports the general on-board device, and a specific rail line supports the special on-board device A. The safe operation of the train is monitored by the general on-board device when the train operates on the ordinary rail line. When the train needs to leave the ordinary rail line and enter the specific rail line, the general on-board device performs handover of the control authority to the special on-board device A, which monitors the safe operation of the train on the specific rail line, according to the ground command or the driver command.

In the process of handover of the control authority of the train of the on-board device, eight operating states of a non-power-on state, a non-power-on state, a configuration state, a data input state, a cold-ready state, a hot-ready state, a train-control state, and a failure state are designed for the special on-board device.

When a special on-board device is powered on, the special on-board device automatically enters a power-on state from a non-power-on state.

In the power-on state, the special on-board device establishes a communication connection with the general on-board device. Meanwhile, the special on-board device sends a request to enter a configuration state to the general on-board device, and the general on-board device sends a command to enter the configuration state to the special on-board device, and the special on-board device enters the configuration state.

When the special on-board device is in the configuration state, the general on-board device sends general train data, train interface state, braking interface state, velocity and distance measurement performance parameters, and braking performance parameters to the special on-board device.

When special train data is required by the special on-board device, the special on-board device sends a request to enter data input state to the general on-board device, and the general on-board device sends a command to enter the data input state to the special on-board device, and the special on-board device enters the data input state. When the special on-board device is in the data input state, the driver may input special train data for the special on-board device through the human-machine interface unit.

When the special train data is not required by the special on-board device, the special on-board device sends a request to enter a cold-ready state to the general on-board device, the general on-board device sends a command to enter the cold-ready state to the special on-board device, and the special on-board device enters the cold-ready state.

The meaning of special train data includes train data that is not contained by generic train data but is required by the special on-board device. For example, CTCS-2 class train-control system in China is a special train-control system that requires the driver to select the carrier frequency so that the on-board device is able to properly decode the carrier frequency information on the ground rail circuit. However, the general on-board device does not use information of rail circuit, therefore, the general on-board device does not have a rail circuit interface, and does not require a driver to select the carrier frequency.

In the cold-ready state, the special on-board device cannot receive ground data transmitted from the ground through the special ground transceiving unit. In the cold-ready state, if the special on-board device receives the command to enter a train-control state from the general on-board device, the special on-board device enters the train-control state and monitors the train operation. In the cold-ready state, if the general on-board device receives a handover command from the ground device or the driver, the handover command designating the special on-board device to enter the hot-ready state, the general on-board device sends a command to enter the hot-ready state to the designated specific on-board device, and the designated special on-board device enters the hot-ready state.

In the hot-ready state, the special on-board device may receive ground data and prepare the data for entering the train-control state. If the special on-board device receives the command to enter the train-control state from the general on-board device, the special on-board device enters the train-control state to monitor the train operation. If the command to enter a cold-ready state is received from the general on-board device, the special on-board device enters the cold-ready state.

In an embodiment of the present invention, in the data input state, the special on-board device requests the driver to input special train data through the human-interface function, and after the input of the special train data is completed, the special on-board device sends a request to enter a cold-ready state to the general on-board device, the general on-board device sends a command to enter the cold-ready state to the special on-board device, and the special on-board device enters the cold-ready state.

In the power-on state, the configuration state, the data input state, the cold-ready state, the hot-ready state, and the train-control state, the special on-board device enters a failure state when the special device detects a failure of the specific on-board device, or the general on-board device detects a failure of the special on-board device and sends a command to enter the failure state to the special on-board device. The general on-board device prohibits the handover of the control authority of the train to the special on-board device that has failed, to ensure the train safety.

In the power-on state, the configuration state, the data input state, the cold-ready state, the hot-ready state, the vehicle train-control state, and the failure state, the special on-board device is powered off and the special on-board device enters a non-power-on state.

According to the train-control on-board device system according to the present invention, which is compatible with various types of train-control systems, a handover process of the control authority of the train between the general on-board device and the special on-board device in the train-control on-board device system will be described below, and handover process of the control authority of the train between a special on-board device and another special on-board device. The general on-board device controls the handover between different on-board devices in the combined train-control on-board device when crossing different rail lines.

Exemplarily, the procedure in which the general on-board device performs the handover of the control authority of the train to the special on-board device A is provided in the present invention:
After the train-control on-board device system is powered on, the special on-board device A passes through the power-on state, the configuration state, and the data input state in this order, and then enters the cold-ready state. At the same time, the general on-board device enters a normal operation state. During operation, according to a ground command or driver command, the general on-board device may command the special on-board device A in the cold-ready state to receive the control authority and monitor train operation.

The general on-board device receives a handover command from the ground device or the driver (the ground device may be a transponder, a wireless transmission apparatus, or a special ground device), controls the special on-board device A to enter the hot-ready state, and displays the device handover advance information through the human-machine interface (DMI). The special on-board device A in the hot-ready state feeds back state information such as the allowable speed of the special on-board device A, the device handover confirmation zone, and the like to the general on-board device, and the general on-board device incorporates the allowable speed of the special on-board device A into a speed monitoring curve (taking the minimum value of the allowable speed of the special on-board device A and the allowable speed of the general on-board device as the allowable speed at the device handover performance point), ensuring that the train passes through the device handover performance point at a smooth speed. After passing the device handover performance point, the general on-board device controls the special on-board device A from the hot-ready state to the train-control state, thereby realizing the handover of the control authority of the train from the general on-board device to the special on-board device A.

In the above-mentioned process of handover of the control authority from the general on-board device to the special on-board device A, when the general on-board device receives the handover command, the general on-board device controls the special on-board device to enter a hot-ready state, and the special on-board device transmits the hot-ready state information to the general on-board device. If the general on-board device does not receive the information that the special on-board device enters the hot-ready state within a certain period of time, the general on-board device controls the special on-board device to enter a failure state, and the device handover fails.

In the above-mentioned process of handover of the control authority from the general on-board device to the special on-board device A, when the train enters the device handover confirmation zone, the general on-board device prompts the driver to confirm the device handover through the human-machine interface (DMI). After the driver receives the command to confirm the device handover, if the driver does not confirm the device handover within a certain period of time, a commonly used braking command is sent to the train by the general on-board device after the certain period of time expires, until the driver confirms the device handover.

In the above-mentioned process of handover of the control authority from the general on-board device to the special on-board device A, after the train passes through the device handover performance point, the general on-board device controls the special on-board device to enter the train-control state, and the special on-board device transmits train-control state information to the general on-board device. If the general on-board device does not receive the information that the special on-board device enters the train-control state within a certain period of time, the general on-board device controls the special on-board device to enter a failure state, and the general on-board device sends a brake and stop command to the train, and the device handover fails.

Exemplarily, the present invention provides the procedure by which the special on-board device A performs the handover of the control authority to the general on-board device:
The special on-board device A monitors the train operation and is in the train-control state.

When the general on-board device receives a device handover command from the transponder, the general on-board device displays the device handover advance information via the human-machine interface (DMI). The general on-board device sends the allowable speed of the device handover performance point to the special on-board device A, and the special on-board device A incorporates the allowable speed given by the general on-board device into a speed monitoring curve (taking the minimum value of the allowable speed of the special on-board device A and the allowable speed given by the general on-board device as the allowable speed of the device handover performance point), ensuring that the train passes the device handover performance point at a smooth speed. After the train passes through the device handover performance point, the general on-board device revokes the control authority of the special on-board device A, and the general on-board device starts to monitor the train operation, thereby realizing the handover of the control authority from the special on-board device A to the general on-board device.

In the above-mentioned process of handover of the control authority from the special on-board device to the general on-board device, after the general on-board device revokes the control authority of the special on-board device A, the human-machine interface function module, the train interface function module, and the braking interface function module in the general on-board device do not respond to the commands and information of the special on-board device any more.

In the above-mentioned process of handover of the control authority from the special on-board device to the general on-board device, after the train passes through the device handover performance point, the general on-board device commands the special on-board device A to enter the cold-ready state, and the special on-board device sends the cold-ready state information to the general on-board device. If the general on-board device does not receive the feedback information that the special on-board device enters the cold-ready state within a certain period of time, the general on-board device commands the special on-board device to enter the failure state, but device handover succeeds.

In the above-mentioned process of handover of the control authority from the special on-board device to the general on-board device, after the train enters the device handover confirmation zone, the general on-board device prompts the driver to confirm the device handover through the human-machine interface (DMI). After the driver receives the command to confirm the device handover, if the driver does not confirm the device handover within a certain period of time, the commonly used braking command is sent to the train by the general on-board device after the certain period of time expires, until the driver confirms the device switching.

Exemplarily, the present invention provides a handover process of the control authority from a special on-board device A to a special on-board device B, and the process is as follows:
After the train-control on-board device system is powered on, the special on-board device B enters the cold-ready state after passing through the power-on state, the configuration state, and the data input state. At the same time, the general on-board device enters a normal operation state.

The train operation is currently monitored by the special on-board device A, and the process of performing the handover to the special on-board device B for controlling the train is as follows:
Upon receiving a device handover command from a ground device (e.g., transponder, wireless, or loop wire), the general on-board device controls the special on-board device B in the cold-ready state to enter the hot-ready state, and displays the device handover advance information through the human-machine interface (DMI). The special on-board device B in the hot-ready state provides the information of the allowable speed of the special on-board device B, the device handover confirmation zone, and the like to the general on-board device, and the general on-board device forwards the information to the special on-board device A in the train-control state, and the special on-board device A incorporates the allowable speed of the special on-board device B into the speed monitoring curve (taking the minimum value of the allowable speed of the special on-board device B and the allowable speed of the special on-board device A as the allowable speed of the device handover performance point), ensuring that the train passes through the device handover performance point at a smooth speed. After the train passes through the device handover performance point, the general on-board device controls the special on-board device A in the train-control state to enter the cold-ready state, and the special on-board device A sends the cold-ready state information to the general on-board device. The general on-board device controls the special on-board device B to enter the train-control state from the hot-ready state, the special on-board device B starts to monitor the train operation, the special on-board device B enters the train-control state, the general on-board device terminates the temporary monitoring of the train operation, the control authority of the train is completely handed to the special on-board device B, and the device handover succeeds. The process in which the special on-board device A performs the handover of the control authority to the special on-board device B can be realized by the above steps.

In the above-mentioned handover of the control authority to the special on-board device B by the special on-board device A, the general on-board device controls the special on-board device B in the cold-ready state to enter the hot-ready state, and the special on-board device B sends the hot-ready state information to the general on-board device. If the general on-board device does not receive the information that the special on-board device B enters the hot-ready state within a certain period of time, the general on-board device controls the special on-board device B to enter the failure state, and the device handover fails.

In the above-mentioned handover of the control authority to the special on-board device B by the special on-board device A, when the train enters the device handover confirmation zone, the general on-board device prompts the driver to confirm the handover device through DMI. After the driver receives the command to confirm the device handover, if the driver does not confirm the device handover within a certain period of time, the commonly used braking command is sent to the train by the general on-board device after the certain period of time expires, until the driver confirms the device handover.

In the above-mentioned handover of the control authority to the special on-board device B by the special on-board device A, after the train passes through the device handover performance point, the general on-board device commands the special on-board device A to enter the cold-ready state from the train-control state, and the general on-board device temporarily monitors the operation of the train until the special on-board device B enters the train-control state.

Meanwhile, after the train passes through the device handover performance point, the general on-board device controls the special on-board device A to enter the cold-ready state, and the special on-board device A transmits cold-ready state information to the general on-board device. If the general on-board device does not receive information that the special on-board device A enters the cold-ready state within a certain period of time, the general on-board device controls the special on-board device A to enter the failure state.

In the above-mentioned handover of the control authority to the special on-board device B by the special on-board device A, the general on-board device controls the special on-board device B to enter a train-control state, and the special on-board device B transmits train-control state information to the general on-board device. If the general on-board device does not receive the information that the special on-board device B enters the train-control state within a certain period of time, the general on-board device controls the special on-board device B to enter the failure state, and device handover fails.

In the handover method in which the general on-board device performs the handover of the right-of-control to the special on-board device A, the special on-board device A performs the handover of the control authority to the general on-board device, and the special on-board device A performs the handover of the control authority to the special on-board device B provided in the embodiment of the present invention, when the train is in a stop state, the driver can change the control authority of the on-board device through a human-machine interface (DMI), and the general on-board device performs the handover of the control authority to the special on-board device designated by the handover command, according to the handover command, or retreats the control authority according to the handover command.

In view of the above, the train-control on-board device system according to the present invention, which is compatible with various train-control systems, can realize that resources of the general on-board device are shared by specific on-board devices, so the cost of the devices is reduced, the volume of the devices is reduced, and the installation of the devices is facilitated. Moreover, monitoring of the train operating on rail lines equipped with different ground devices can be performed, increasing the adaptability and compatibility of the system.

Finally, it is also noted that in this document relational terms such as "one" and "another one" and the like are used solely to distinguish one entity or operation from another entity or operation without necessarily requiring or implying any actual such relationship or order between such entities or operations. Furthermore, the terms "includes, " "including", or any other variation thereof, are intended to cover a non-exclusive inclusion, such that a process, method, article, or device that comprises a list of elements does not include only those elements but may include other elements not expressly listed or inherent to such process, method, article, or device. An element proceeded by the statement "comprises one" does not, without more constraints, preclude the existence of additional identical elements in the process, method, article, or device that comprises the element.

Although the present invention has been described in detail with reference to the foregoing embodiments, it will be appreciated by those skilled in the art that modifications may be made to the teachings of the foregoing embodiments, or equivalents may be substituted for some of the features thereof. However, such modifications and substitutions do not materially depart from the spirit and scope of the embodiments of the present invention.

## Claims

1. A train-control on-board device system compatible with various types of train control systems, **characterized in that** the system comprises a general on-board device having control authority and several special on-board devices each having a simplified structure, wherein,
the special on-board device includes a train safety monitoring function and a function of interacting with a ground device, and the general on-board device includes several function modules to be shared by the special on-board device.

2. The train-control on-board device system according to claim 1, **characterized in that**, the special on-board device includes only the train safety monitoring function and the function of interacting with the ground device.

3. The train-control on-board device system according to claim 1, **characterized in that**, the general on-board device further includes: a train monitoring function module and a special on-board device control function module,
the train monitoring function module is configured to implement core logic of train safety monitoring;
the special on-board device control function module is configured for the general on-board device to manage the several special on-board devices to realize handover of the control authority to the several special on-board devices.

4. The train-control on-board device system according to claim 1, **characterized in that**, the function modules to be shared by the special on-board device include: a wireless transmission function module, a transponder transmission function module, a velocity and distance measurement function module, a human-machine interface function module, a reference time function module, a data recording function module, a train interface function module, and a braking interface function module.

5. The train-control on-board device system according to claim 1, **characterized in that**, one terminal of the special on-board device is connected to the general on-board device and another terminal thereof is connected to a special ground information transceiving unit.

6. The train-control on-board device system according to claim 5, wherein the special on-board device interacts information with the ground device through the special ground information transceiving unit.

7. The train-control on-board device system according to claim 1, **characterized in that**, when the train-control on-board device is powered on, the special on-board device sends to the general on-board device a request to establish a communication connection, and the general on-board device receives the request and checks whether system version of the special on-board device is compatible.

8. The train-control on-board device system according to claim 7, **characterized in that**, when the general on-board device is compatible with the system version of the special on-board device, the general on-board device establishes the communication connection with the special on-board device, and when the generic on-board device is not compatible with the system version of the specific on-board device, the generic on-board device refuses to establish the communication connection with the specific on-board device.

9. The train-control on-board device system according to claim 1, **characterized in that**, when the special on-board device reports a failure to the general on-board device or the general on-board device detects a failure of the special on-board device, the general on-board device prohibits handover of the control authority to the special on-board device.

10. The train-control on-board device system according to claim 1, **characterized in that**, the special on-board device automatically enters a power-on state from a non-power-on state when the special on-board device is powered on, and the special on-board device in the power-on state establishes a communication connection with the general on-board device.

11. The train-control on-board device system according to claim 1, **characterized in that** the special on-board device in a power-on state sends a request to enter a configuration state to the general on-board device, and the general on-board device receives the request to enter the configuration state and sends a command to enter the configuration state to the special on-board device, so that the special on-board device enters the configuration state.

12. The train-control on-board device system according to claim 1 or 11, **characterized in that**, when the special on-board device is in the configuration state, the general on-board device sends general train data, train interface state, braking interface state, velocity and distance measurement performance parameters, and braking performance parameters to the special on-board device.

13. The train-control on-board device system according to claim 1, **characterized in that**, if special train data is required by the special on-board device, the special on-board device sends a request to enter data input state to the general on-board device, and the general on-board device sends a command to enter the data input state to the special on-board device, so that the special on-board device enters the data input state.

14. The train-control on-board device system according to claim 1, **characterized in that**, if the special train data is not required by the special on-board device, the special on-board device sends a request to enter a cold-ready state to the general on-board device, and the general on-board device sends a command to enter the cold-ready state to the special on-board device so that the special on-board device enters the cold-ready state.

15. The train-control on-board device system according to claim 1, **characterized in that**, the special on-board device in the data input state requests a driver to input special train data through a human-machine interface function.

16. The train-control on-board device system according to claim 1 or 15, **characterized in that** after the special on-board device completes input of the special train data, the special on-board device sends a request to enter a cold-ready state to the general on-board device, and the general on-board device sends a command to enter the cold-ready state to the special on-board device, so that the special on-board device enters the cold-ready state.

17. The train-control on-board device switching system according to claim 1, **characterized in that**, the special on-board device in a cold-ready state cannot receive ground data transmitted through a ground transceiving unit.

18. The train-control on-board device system according to claim 1, **characterized in that**, when the special on-board device in a cold-ready state receives a command to enter a train-control state from the general on-board device, the special on-board device enters the train-control state.

19. The train-control on-board device system according to claim 1, **characterized in that**, when the general on-board device in a cold-ready state receives a handover command from the ground device or a driver which designates the special on-board device to enter a hot-ready state, the general on-board device sends a command to enter the hot-ready state to the designated specific on-board device, and the designated special on-board device enters the hot-ready state.

20. The train-control on-board device system according to claim 1 or 19, **characterized in that**, the special on-board device in a hot-ready state is capable of receiving ground data.

21. The train-control on-board device system according to claim 1 or 19, **characterized in that**, when the special on-board device in a hot-ready state receives a command to enter the train-control state from the general on-board device, the special on-board device enters a train-control state.

22. The train-control on-board device system according to claim 1 or 19, **characterized in that**, when the special on-board device in a hot-ready state receives a command to enter a cold-ready state from the general on-board device, the special on-board device enters the cold-ready state.

23. The train-control on-board device system according to claim 1, **characterized in that**, the special on-board device enters a failure state when the specific on-board device, in a power-on state, a configuration state, a data input state, a cold-ready state, a hot-ready state, and a train-control state, detects a failure of the specific on-board device, or the general on-board device detects a failure of the special on-board device and sends a command to enter the failure state to the specific on-board device.

24. The train-control on-board device system according to claim 23, **characterized in that**, in the power-on state, the configuration state, the data input state, the cold-ready state, the hot-ready state, the vehicle train-control state, and the failure state, the special on-board device is powered off and the special on-board device enters a non-power-on state.

25. The train-control on-board device system according to claim 1 or 23 or 24, **characterized in that**, when the special on-board device fails or is powered off, handover of the control authority to the general on-board device is performed, and the train-control on-board device system is in a normal state.

26. The train-control on-board device system according to claim 1, **characterized in that** when the train is in a stop state, the general on-board device, in accordance with a handover command, performs handover of the control authority to a special on-board device designated by the handover command or retracts the control authority according to the handover command.
